# EUROPÄISCHE PATENTANMELDUNG

(11) **EP 2 561 770 A1**
(43) Veröffentlichungstag der Anmeldung: **27.02.2013**
(21) Anmeldenummer: 12004315.3
(22) Anmeldetag: 06.06.2012
(51) Int. Cl.: A23N 12/00, B02C 18/00, C13B 5/06

(54) **Vorrichtung zur Aufbereitung von landwirtschaftlichem Erntegut als Aufgabematerial in einem Bioreaktor**

(30) Priorität: 24.08.2011 DE 102011110994
(71) Anmelder: Huning Maschinenbau GmbH, 49324 Melle (DE)
(72) Erfinder: Huning, Walter, 49324 Melle (DE)
(74) Vertreter: Pott, Ulrich

(57) **Zusammenfassung**

Die Erfindung bezieht sich auf eine Vorrichtung (1) zur Aufbereitung von landwirtschaftlichem Erntegut als Aufgabematerial für einen Bioreaktor, insbesondere zur Aufbereitung von Rüben, mit einer Reinigungsstufe (7) und einer sich in Erntegutförderrichtung (15) daran anschließenden Zerkleinerungsstufe (9). Um eine mobile Vorrichtung geschaffen zu haben, mit der auch Rüben als landwirtschaftliches Erntegut ohne das Erfordernis eines Waschvorganges für einen nachfolgenden Fermentationsprozess sicher aufbereitet werden kann unter Einschluss einer Reinigung und nachfolgenden Zerkleinerung ist vorgesehen, dass die Reinigungsstufe (7) mehrere nebeneinander auf einem in eine Rotationsbewegung versetzbaren Walzenkörper (14) mit Abstand zueinander angeordnete Reinigungswerkzeuge (13) aufweist, wobei in Erntegutförderrichtung (15) mehrere Reihen von mit Reinigungswerkzeugen (13) versehenen Walzenkörpern (14) vorgesehen sind, über die das Erntegut in Richtung der Zerkleinerungsstufe (9) transportierbar ist, und dass die Zerkleinerungsstufe (9) mehrere nebeneinander angeordnete Zerkleinerungswerkzeuge (16) aufweist, denen zumindest ein nachgiebig gehalterter Andrückkörper (18) zugeordnet ist.

## Beschreibung

Die Erfindung bezieht sich auf eine Vorrichtung zur Aufbereitung von landwirtschaftlichem Erntegut als Aufgabematerial für einen Bioreaktor, insbesondere zur Aufbereitung von Rüben, mit einer Reinigungsstufe und einer sich in Erntegutförderrichtung daran anschließenden Zerkleinerungsstufe.

Landwirtschaftliches Erntegut als Aufgabematerial für Bioreaktoren (Fermenter) von Biogasanlagen wird verwendet, um Energie aus nachwachsenden Rohstoffen zu erzeugen. Derzeit werden Mais als Erntegut oder sonstige Getreidegüter in Biogasanlagen hauptsächlich verwertet.

Rüben als Energieträger in Biogasanlagen finden derzeit noch relativ wenig Verwendung, da diese nach ihrer Ernte mit Lehm- und Erdanbackungen, Steinverschmutzungen und dgl. versehen sind. Sollen Rüben in Biogasanlagen Verwendung finden, sind diese einem besonderen Reinigungsvorgang auszusetzen. Dazu wurden Waschanlagen entwickelt, um die Rüben zu reinigen und zu entsteinen. Solche Waschanlagen können bislang eher nur als stationär betriebene Reinigungs- und Entsteinungsanlagen zur Verfügung gestellt werden, womit ihr Einsatz eher auf eine räumliche Nähe zu Zuckerrübenfabriken eingeschränkt ist. Das begrenzt die Reinigung von Rüben auf einen geographisch eingegrenzten Bereich wegen der ansonsten nicht mehr zu vertretenen Transportwege.

Erste Versuche, Reinigungs- und Waschanlagen für Rüben auch instationär zu betreiben, erfordern sehr aufwändige bauliche Maßnahmen und haben daher bislang nicht befriedigt. Auch ist die Zufuhr und die Abfuhr der entsprechenden Reinigungsflüssigkeit bau- und kostenintensiv. Andererseits müssen Rüben für eine nachfolgenden Verwendung in einen Bioreaktor nicht nur gereinigt, sondern darüber hinaus auch aufbereitet werden, da ansonsten die relativ harte Schale einer geernteten und auch gereinigten Rübe einer nachfolgenden Verarbeitung in einem Bioreaktor entgegensteht. Die harte Schale allerdings erlaubt auf der anderen Seite eine relativ lange Lagerbarkeit einer Rübe, so dass eine wirtschaftlich gereinigte und auch für eine spätere Verwendung entsprechend zerkleinert aufbereitete Rübe dieses landwirtschaftliche Erntegut als Aufgabematerial für einen Bioreaktor sehr interessant macht.

Es ist daher Aufgabe der vorliegenden Erfindung, eine Vorrichtung zur Aufbereitung von landwirtschaftlichem Erntegut als Aufgabematerial für einen Bioreaktor zu schaffen, insbesondere eine Vorrichtung zur Aufbereitung von Rüben zu schaffen, bei der mit einer Reinigungs- und einer sich daran anschließenden Zerkleinerungsstufe Erntegut, insbesondere Rüben, wirkungsvoll so zu reinigen, zu entsteinen und zu zerkleinern und damit insgesamt aufzubereiten sind, dass es als Aufgabematerial in einem Bioreaktor wirkungsvoll genutzt werden kann.

Zur Lösung dieser Aufgabe zeichnet sich die Vorrichtung der eingangs genannten Art dadurch aus, dass die Reinigungsstufe mehrere nebeneinander auf einem in eine Rotationsbewegung versetzbaren Walzenkörper mit Abstand zueinander angeordnete Reinigungswerkzeuge aufweist, wobei in Erntegutförderrichtung mehrere Reihen von mit Reinigungswerkzeugen versehene Walzenkörper vorgesehen sind, über die das Erntegut in Richtung der Zerkleinerungsstufe transportierbar ist, und dass die Zerkleinerungsstufe mehrere nebeneinander angeordnete Zerkleinerungswerkzeuge aufweist, denen zumindest ein nachgiebig gehalterter Andrückkörper zugeordnet ist.

Damit ist eine Vorrichtung zur Aufbereitung von landwirtschaftlichem Erntegut als Aufgabematerial in einem Bioreaktor geschaffen, mit der nicht nur sonstiges landwirtschaftliches Erntegut, sondern insbesondere auch Rüben derart aufbereitet werden können, ohne dass es einer Reinigungsflüssigkeit bedarf, dass die Rüben nach Durchlaufen der erfindungsgemäßen Vorrichtung direkt einem Bioreaktor und/oder einem Silo zugeführt werden können. Dabei ist die Vorrichtung als mobile oder instationär betriebene Vorrichtung auszubilden, so dass sie vor Ort auch von Betreibern von Biogasanlagen direkt genutzt werden kann. Damit kann sich der Biogasbetreiber auch die gute Lagerfähigkeit der Rüben zu Nutze machen, nachdem er die Rübe nach ihrer Ernte so wie sie geerntet wurde bevorratet und bedarfsweise der Vorrichtung nach der vorliegenden Erfindung zuführt, reinigt, entsteint und zerkleinert, so dass die so aufbereitete Rübe dann in dem Bioreaktor als Energieträger zu nutzen ist.

Die geerntete Rübe kann mit Erd- und Lehmanbackungen und auch mit Steinen versehen den an den Walzenkörper vorgesehenen rotierenden Reinigungswerkzeugen in der Reinigungsstufe zugeführt werden. In dieser Reinigungsstufe werden die Rüben von Erde, Lehm und Steinen auf mechanischem Wege gereinigt. Dadurch, dass nicht nur Reinigungswerkzeuge auf einem Walzenkörper nebeneinander vorgesehen sind, sondern auch in Transportrichtung des Erntegutes auf mehreren Walzenkörpern, die wiederum mehrere nebeneinander mit Abstand angeordnete Reinigungswerkzeuge aufweisen, werden die zu reinigenden und zu entsteinenden Rüben nacheinander einzelnen Reinigungsprozessen zugeführt, so dass in diesen zunächst auf mechanischem Wege eine Grobreinigung unter Einschluss des Befreiens von Steinen durchgeführt wird und unter kontinuierlichem Weitertransport dann Reinigungsvorgänge mit immer feiner werdenden Reinigungsschritten erfolgen. Das dabei frei werdende verunreinigende Material unter Einschluss von Steinen kann kontinuierlich aus der Reinigungsstufe abgeführt werden, so dass je nach Bodenverhältnissen über die Anzahl der einzelnen Walzenkörper eine optimale Reinigung der Rüben erfolgen kann. In der nachfolgenden Zerkleinerungsstufe können noch nicht abgetrennte Steine weiter abgeschieden werden, indem diese in Längsrichtung weiter transportiert werden können, Rübenstücke jedoch durch den Andrückkörper durch die Zerkleinerungswerkzeuge hindurch abgeführt werden können.

Um weitere einsatzoptimierte Einstellmöglichkeiten vorsehen zu können, können auch noch Abstandmaße von Reinigungswerkzeugen verstellbar ausgebildet sein. Die Reinigungswerkzeuge von benachbarten Reihen können dabei bevorzugtermaßen mit einem gewissen Überlappungsmaß und somit paarweise versetzt zueinander angeordnet sein. Als Reinigungswerkzeuge bieten sich beispielsweise Fingerwerkzeuge, beispielsweise Fingerscheiben an, wobei die Finger leicht geneigt ausgebildet sein können, sei es in Förderrichtung, sei es gegen die Förderrichtung, wobei auch einzelne Reinigungswerkzeuge Finger mit einer Neigung in Förderrichtung haben und andere wiederum Finger gegen die Fördervorrichtung. Es ist auch möglich, paarweise noch andere Reinigungswerkzeugtypen zwischen zu ordnen, um auf die zu reinigenden Rüben eine optimale Reinigungskraft ausüben zu können.

Die so gereinigten Rüben werden dann der Zerkleinerungsstufe zugeführt. Diese Zerkleinerungsstufe weist wiederum nebeneinander angeordnete Zerkleinerungswerkzeuge auf. Diese Zerkleinerungswerkzeuge zerkleinern die entsprechenden Rüben jedoch nicht allein. Vielmehr ist entscheidend, dass diesen ein nachgiebig gehalterter Andrückkörper zugeordnet ist. Dieser kann z.B. in Förderrichtung nach vorn und/oder nach oben hin mit einer entsprechenden Nachgiebigkeit ausweichen, so dass beispielsweise in dem Fall, in dem ein noch anhaftender Stein eine Zerkleinerung beeinträchtigt, dies bei der Zerkleinerung berücksichtigt werden kann mit dem Ergebnis, dass noch etwaige Feststoffe auch aus der Zerkleinerungsstufe abgeführt werden können. Bevorzugtermaßen sind mehrere nachgiebig gehalterte Andrückkörper vorhanden, und zwar sowohl in einer Reihe mit einem Versatzmaß nebeneinander, als auch in Erntegutförderrichtung nacheinander in mehreren Reihen, so dass die zu zerkleinernde Rübe nacheinander verschiedene Einzelzerkleinerungsstufen mit jeweiligen nachgiebig gehalterten Andrückkörpern durchläuft, was dort nicht nur zu einem Zerschneiden, sondern auch zu einem Zerreißen, Zerklumpen und dgl. der Rüben führt. Dies führt zu zerkleinerten Rübenstücken mit unterschiedlichen Außenkonturen, was für einen nachfolgenden Fermentationsprozess in einem Bioreaktor einer Biogasanlage einen optimalen Energieträger darstellt. Die Rübenstücke können nach unten abgeführt werden, während z.B. Steine in Längsrichtung abgeführt werden. Auf diese Weise sortiert die Zerkleinerungsstufe zusätzlich Rüben von Steinen unter Ausnutzung ihrer Unterschiede in Bezug auf ihre Härten.

Damit ist eine Vorrichtung geschaffen, mit der insbesondere auch Rüben in einer optimalen Weise aufbereitet werden können, und zwar vor Ort ohne des Bedarfes von sonstiger Anschlussstellen für eine Reinigungsflüssigkeitsversorgung, wodurch eine derartige Vorrichtung auch von Lohnunternehmern betrieben werden kann, die von Biogasbetreibern für den jeweiligen Aufbereitungsprozess von gelagerten Rüben geordert werden können.

Als Zerkleinerungswerkzeuge bietet sich wiederum auch eine Vielzahl von nebeneinander und hintereinander angeordneten Zerkleinerungswerkzeugen an. Diese sind auch jeweils mit Abstand zueinander bevorzugtermaßen angeordnet und greifen paarweise ineinander. Bewährt haben sich hierbei Mehrkantscheiben, beispielsweise Sechskantscheiben, die paarweise auch von ihrer Kontur her so versetzt zueinander angeordnet sind, dass eine oben stehende Kante einer oben stehenden Spitze eines benachbarten Mehrkantscheibenwerkzeuges zugeordnet ist. Die Andrückkörper können individuell nachgiebig gestaltet sein, beispielsweise kann jeder Andrückkörper individuell einzeln nachgiebig gehaltert sein. Es ist auch möglich, Gruppen von einzelnen Andrückkörpern, beispielsweise Andrückrollen oder Andrückwalzen, zusammenzufassen und Einzelgruppen mit einer gemeinsamen Nachgiebigkeit auszustatten. Auch kann die Größe der Nachgiebigkeit sich beispielsweise in Erntegutförderrichtung verändern und beispielsweise zum Ende der Erntegutförderbewegung straffer ausgebildet sein als zu Beginn der Erntegutförderbewegung in der Zerkleinerungsstufe. Die Nachgiebigkeit kann durch den Einbau von Federn, aber auch von Zylindern erfolgen. Es ist beispielsweise auch möglich, elektronische Steuergeräte mit einzubauen, um den Zerkleinerungsvorgang zu überwachen und eine Nachgiebigkeit automatisiert durchzuführen.

Einzelnen Stufen können Abförderer zugeordnet sein, beispielsweise für die Abführung von Verunreinigungen, Steinen und dgl. Der Reinigungsstufe ist beispielsweise ein Zuförderer mit einem Bunker und einer Schnecke zugeordnet, wobei der Zerkleinerungsstufe z.B. ein trichterförmiger Behälter zugeordnet ist, über den das zerkleinerte Erntegutmaterial einem Abförderer, z.B. in Gestalt einer Schnecke zugeführt werden kann. Die Schnecke kann gelenkige Bereiche haben, um das zerkleinerte aufbereitete Erntegut einem weiteren Transportprozess zu einem Bioreaktor zuführen zu können.

Weitere vorteilhafte Gestaltungen der Erfindung ergeben sich aus den Unteransprüchen, der nachfolgenden Beschreibung und der Zeichnung. In der Zeichnung zeigen:

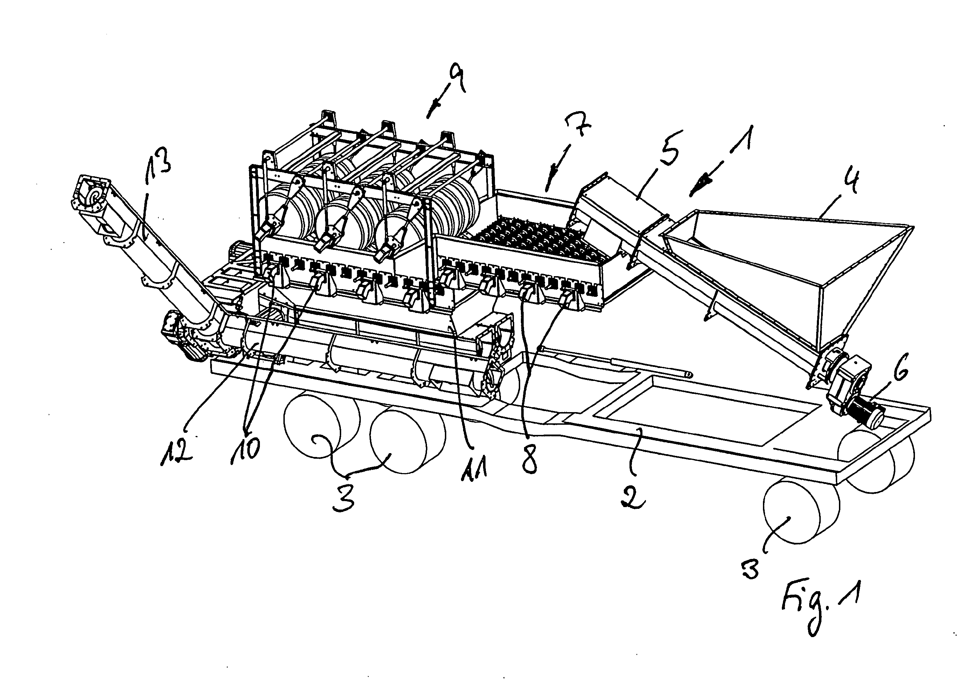

- Fig. 1: in einer schematischen perspektivischen Darstellung ein Ausführungsbeispiel einer Vorrichtung zur Aufbereitung von Rüben;
- Fig. 2: eine Seitenansicht auf das Ausführungsbeispiel nach Fig. 1;
- Fig. 3: eine Draufsicht auf das Ausführungsbeispiel nach Fig. 1;

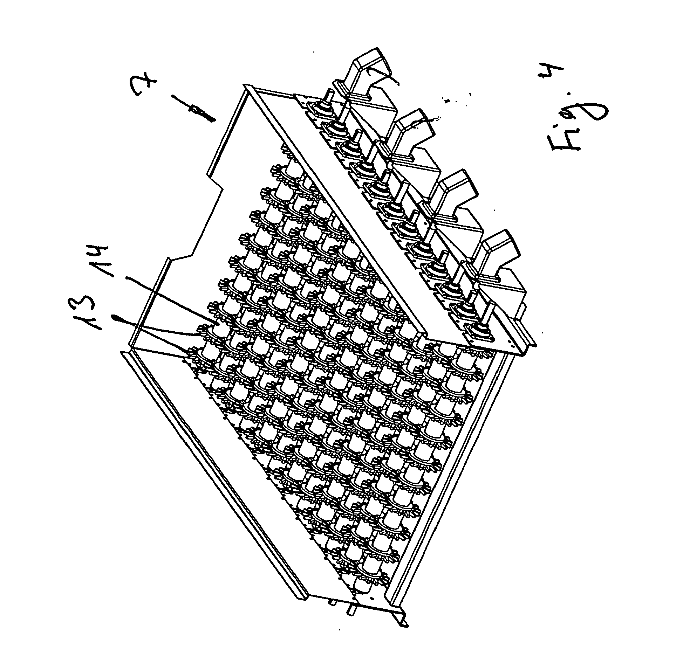

- Fig. 4: schematisch eine perspektivische Darstellung der Reinigungsstufe des Ausführungsbeispiels nach Fig. 1;

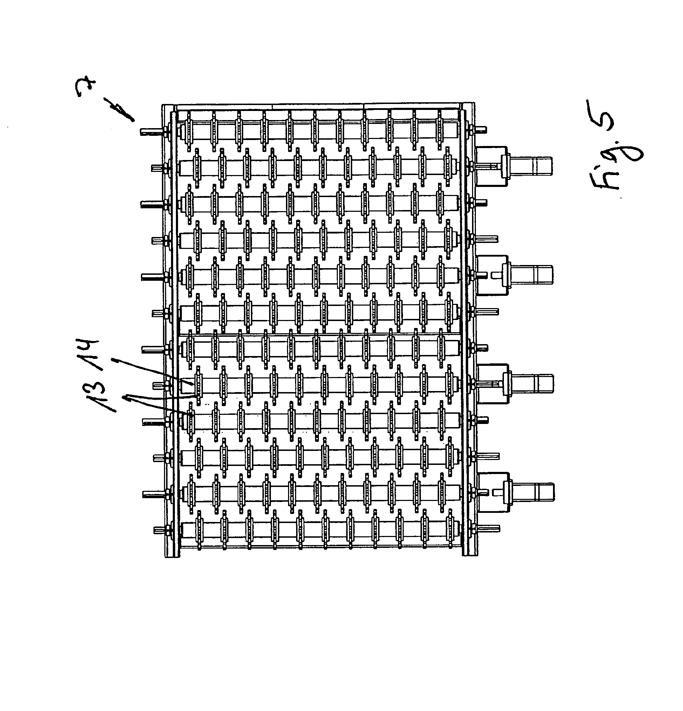

- Fig. 5: eine Draufsicht auf das Ausführungsbeispiel nach Fig. 4;

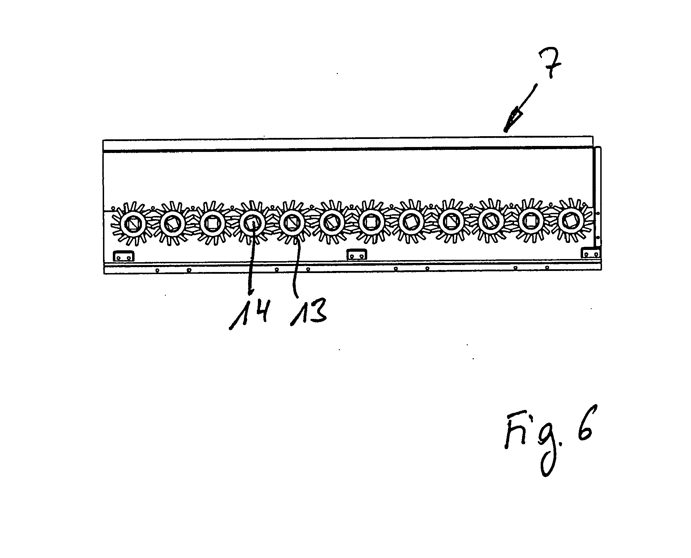

- Fig. 6: eine Seitenansicht des Ausführungsbeispiels nach Fig. 4;

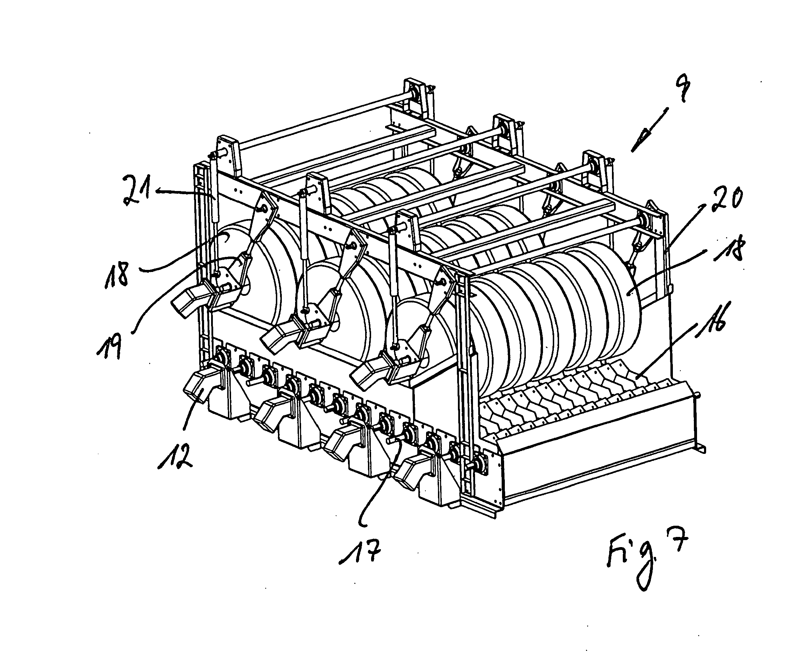

- Fig. 7: eine perspektivische Darstellung der Zerkleinerungsstufe des Ausführungsbeispiels nach Fig. 1;
- Fig. 8: eine Längsschnittdarstellung gemäß dem Ausführungsbeispiel nach Fig. 7;

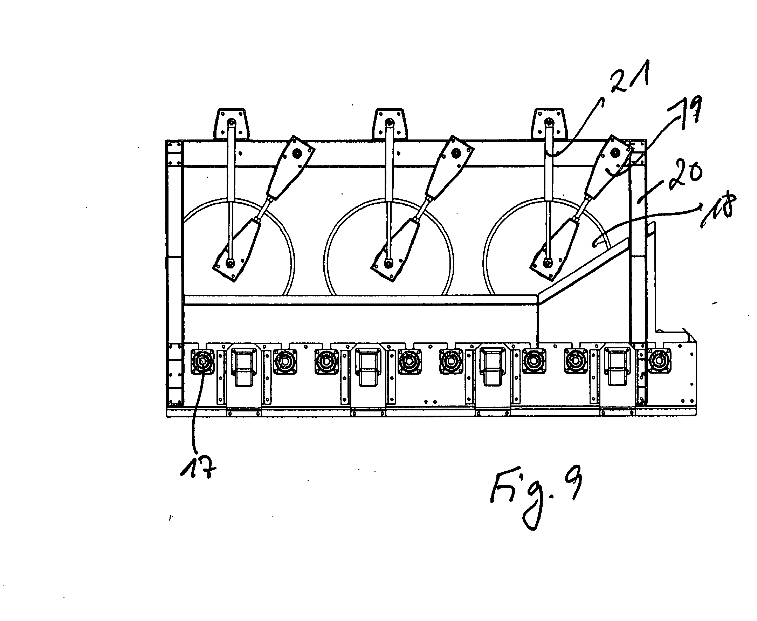

- Fig. 9: eine Seitenansicht auf das Ausführungsbeispiel nach Fig. 7.
- Fig. 10: eine zur Fig. 8 analoge Darstellung mit Verdeutlichung des Betriebes des Ausführungsbeispiels bei Anfall von Rüben und Steinen;
- Fig. 11: eine Vorderansicht auf das Ausführungsbeispiel nach Fig. 10,
- Fig. 12: eine zur Fig. 10 analoge Darstellung mit Andrückkörpern mit unterschiedlichen Drehrichtungen, und
- Fig. 13: eine Vorderansicht auf das Ausführungsbeispiel nach Fig. 12

In der Zeichnung sind grundsätzlich übereinstimmende Teile mit übereinstimmenden Bezugsziffern versehen. Allgemein mit 1 ist die mobile Vorrichtung zur Aufbereitung von landwirtschaftlichen Erntegut wie Rüben als Aufgabematerial in einem Bioreaktor beziffert. Dieser hat ein Fahrgestell 2 und ist über Räder 3 auf dem Erdboden abgestützt. Nicht näher dargestellt kann dieser eine Deichsel haben, um von einem Zugfahrzeug, beispielsweise von einem landwirtschaftlichen Schlepper, an den Ort der Aufbereitung gezogen zu werden.

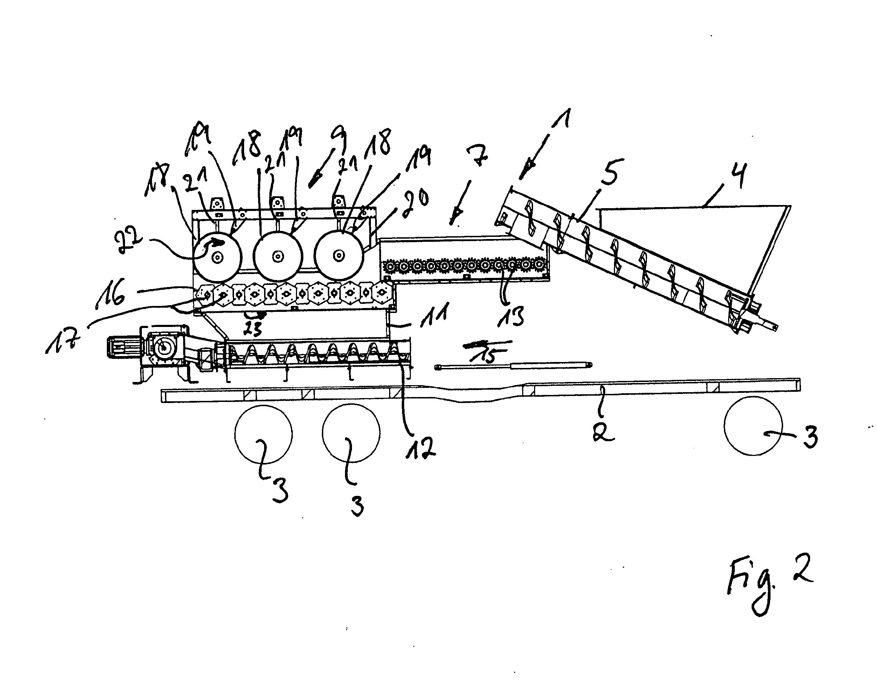

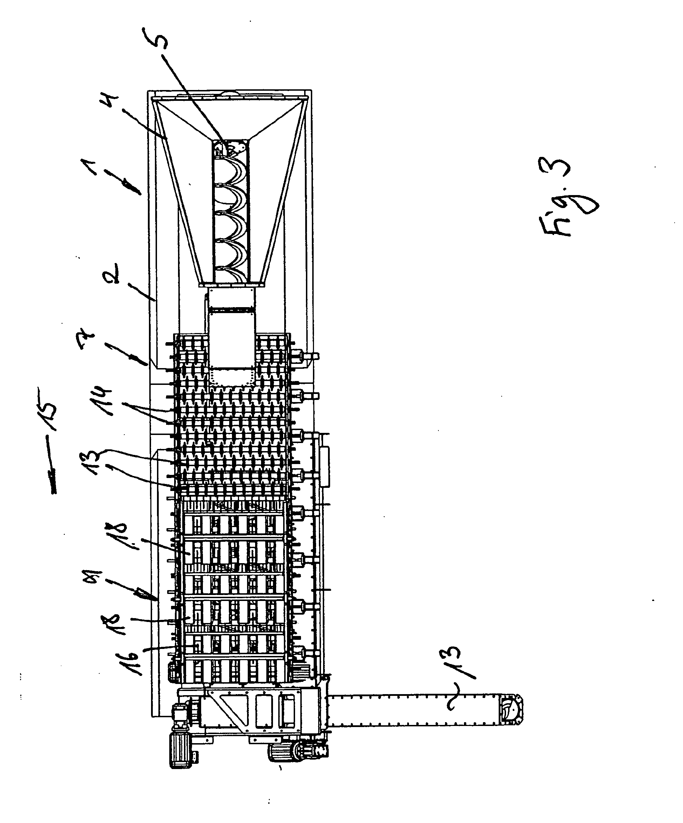

Die Vorrichtung 1 hat einen Bunker 4, über den das landwirtschaftliche Erntegut wie insbesondere Rüben auf einen Zuförderer 5 in Gestalt einer von einem Elektromotor 6 angetriebenen Förderschnecke gegeben werden kann. Von der Förderschnecke kann das Erntegut dosiert einer allgemein mit 7 bezifferten Reinigungsstufe zugeführt werden, wie sie näher in nachfolgenden Figuren erläutert werden wird. Von dem Erntegut abgetrennte Verunreinigungen können beispielsweise über Auslässe 8 ausgetragen werden. In der Reinigungsstufe 7 werden die Rüben bzw. anderes Erntegut weitertransportiert, bis es eine nachfolgende Zerkleinerungsstufe 9 gelangt, wie sie auch noch in weiteren Figuren näher erläutert werden wird. Unterhalb der Zerkleinerungsstufe 9 ist ein trichterförmiger Behälter 11 vorgesehen, in den das zerkleinerte Material fällt und von dem aus das zerkleinerte Material an eine Förderschnecke 12 gegeben werden kann, die es an einen Höhenförderer 23, wiederum in Gestalt einer Schnecke, überführt. Dieser kann z.B. gelenkig ausgebildet sein, um eine unterschiedliche Höhenausrichtung darstellen zu können. Aus den Fig. 2 und 3 ist der Gesamtaufbau der Maschine noch näher ersichtlich.

Wie bereits aus den Fig. 2 und 3 hervorgeht, hat die Reinigungsstufe eine Vielzahl von Reinigungswerkzeugen 13, die auf Walzenkörpern 14 angeordnet sind und zwar derart, dass jeder Walzenkörper 14 mit darauf angeordneten Reinigungswerkzeugen 13 eine Reihe von Zerkleinerungswerkzeugen 16 bildet. Benachbarte Reihen haben jeweils auf dem Walzenkörper 14 angeordnete Reinigungswerkzeuge 13, die versetzt zueinander angeordnet sind und einander überlappen. Diese Reinigungswerkzeuge 13 sind rotierend angetrieben und beispielsweise als Sternscheiben oder als Fingerscheiben ausgebildet mit auf einer Umfangsfläche angeordneten Fingern, die z.B. ein wenig geneigt ausgebildet sein können. Diese können aus einem Kunststoffmaterial bestehen, wobei die Finger auch eine gewisse Elastizität haben können, um bei einem Auftreffen von z.B. Steinmaterialien wegzubiegen, um eine größere Durchlassfläche freizugeben, um dann die Steine in dieser Reinigungsstufe ausbringen zu können.

Es kann vorgesehen sein, dass die Rotationsgeschwindigkeit der einzelnen Walzenkörper einstellbar ist. Einzelne Walzenkörper 14 können z.B. jeweils bezogen auf die Erntegutförderrichtung mit unterschiedlichen Rotationsgeschwindigkeiten arbeiten.

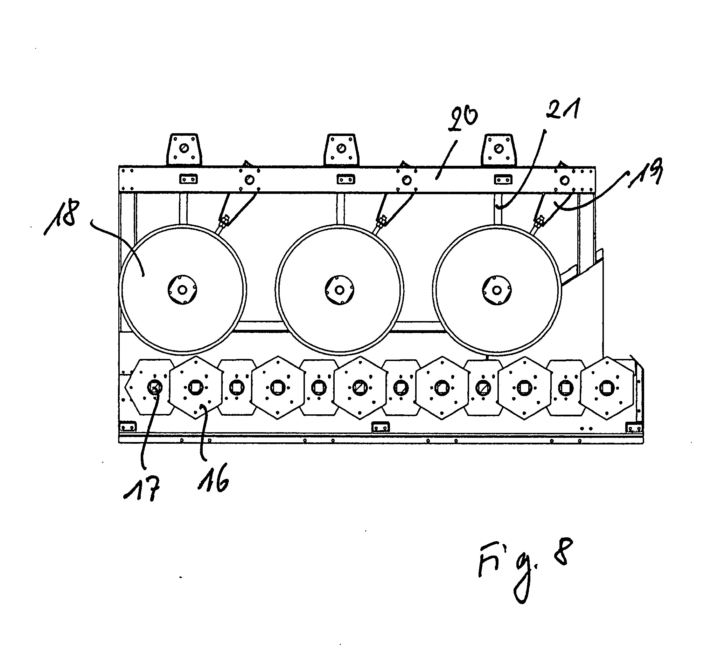

Die Zerkleinerungsstufe hat ihrerseits Zerkleinerungswerkzeuge 16. Es kann eine Vielzahl von Zerkleinerungswerkzeugen 16 in Erntegutförderrichtung und auch in Querrichtung der Vorrichtung vorgesehen sein. Die Zerkleinerungswerkzeuge 16 sind auf Walzenkörpern 17 angeordnet, wobei bei jedem Walzenkörper 17 mit Abstand nebeneinander angeordnete Walzenkörper 16 vorgesehen sind. Auch diese sind so ausgebildet, dass die Werkzeuge 17 einander benachbarter Walzenkörper 16 ein derartiges Versatzmaß haben, dass diese paarweise ineinandergreifen können mit einem gewissen Überlappungsmaß. Dies ist Fig. 2 und insbesondere auch Fig. 8 zu entnehmen, wo ein Ausführungsbeispiel dargestellt ist, bei dem die Zerkleinerungswerkzeuge 17 als Sechskantscheiben ausgebildet sind, die jeweils derart paarweise versetzt zueinander angeordnet sind, dass in Förderrichtung die Spitze einer Mehrkantscheibe nach oben weist, wohingegen bei der anderen benachbarten Scheibe 16 eine Kante nach oben weist.

Oberhalb der Zerkleinerungswerkzeuge 16 sind Andrückkörper 18 in Gestalt von Andrückrollen bzw. Andrückwalzen vorgesehen. Diese sind über Schwingen 19 an einem Rahmen 20 schwenkbeweglich gehaltert. Diese Schwingen 19 können längenveränderlich sein und haben zudem noch Dämpferkörper 21 in Gestalt von Dämpferzylindern, über die die nachgiebige Schwenkbewegung einstellbar ist. In dem gezeigten Ausführungsbeispiel ist jede Reihe von Andrückkörpern 18, die ebenfalls auf einer Walze angeordnet sind, über jeweils zwei Dämpferzylinder 21 zu beiden Seiten der Vorrichtung abgestützt. Es ist aber auch möglich, jeden Andrückkörper individuell nachgiebig zu haltern. Die Schwingen 19 müssen ihrerseits nicht nachgiebig gehalten sein. Vielmehr reicht es in vielen Anwendungsfällen auch aus, dass die Nachgiebigkeit allein durch die Dämpfer 21 eingestellt wird. Anstelle der Dämpfer 21 können selbstverständlich auch Federn oder sonstige, die Nachgiebigkeit ermöglichende Einstellelemente vorgesehen sein.

Im Betrieb werden z.B. die Rüben über den Bunker 4 auf die Zuführschnecke 5 gegeben, von denen die Rüben der Reinigungsvorrichtung 7 zugeführt werden. Die Rüben gelangen auf die Reinigungswerkzeuge 13 und werden von diesen unter permanenter Reinigungsbearbeitung weiter transportiert in Richtung der Zerkleinerungsstufe 9. Dabei platzen anhaftende Erden, Lehm aber auch Steine ab. Durch die fortlaufende reinigende Bearbeitung durch die Vielzahl der Reinigungswerkzeuge 13 können auch zunächst äußere Anbackungen abgearbeitet werden, um dann zunehmend sich der Schale der Rübe zu nähern. Das abgearbeitete Verunreinigungsmaterial kann direkt aus der Reinigungsstufe 7 ohne die Zufuhr von Flüssigkeit ausgebracht werden.

In der nachfolgenden Zerkleinerungsstufe 9 rotieren die Andrückkörper 18 genauso wie die Zerkleinerungswerkzeuge 16. Bevorzugtermaßen rotieren die Andrückkörper 18 gegen den Uhrzeigersinn 23 (Fig. 2). Damit rotieren Andrückkörper 18 und Zerkleinerungswerkzeuge 16 gegensinnig. Die zu zerkleinernden Rüben gelangen mithin auf die Vielzahl der Zerkleinerungswerkzeuge 16 und gelangen dabei in den Bearbeitungsbereich der Andrückkörper 18. Je nach Festigkeit lenken dann die Andrückkörper 18 aus und üben eine Kraft in Richtung auf die Zerkleinerungswerkzeuge 16 und die Rübe aus. Je nach dem, wie groß die Andrückkraft eingestellt ist und wie hoch die Rotationsgeschwindigkeit ist, wird die Rübe von außen her bearbeitet und mithin zerkleinert, zerrupft oder sonst wie mechanisch bearbeitet, so dass sich dabei Stücke aus der Rübe entfernen lassen, bis sie in den Bearbeitungsbereich einer in Gutförderrichtung nachfolgenden Zerkleinerungswerkzeuganordnung mit zugeordnetem Andrückkörper 18 gelangt. Dadurch wird die Rübe in der kleinen nachfolgenden Zerkleinerungsstufe weiter zerkleinert, zerrupft oder zermalmt mit einem Zerkleinerungsergebnis, was für einen nachfolgenden Biorekator bzw. für den nachfolgenden Fermentationsprozess optimal ist.

In der Reinigungsstufe 7 werden Fremdstoffe nach unten abgeführt und Rüben werden in Längsrichtung transportiert. In der Zerkleinerungsstufe 9 ist es umgekehrt: Rübenstücke werden nach unten abgeführt, große Steine und Fremdstoffe werden in Längsrichtung abgeführt.

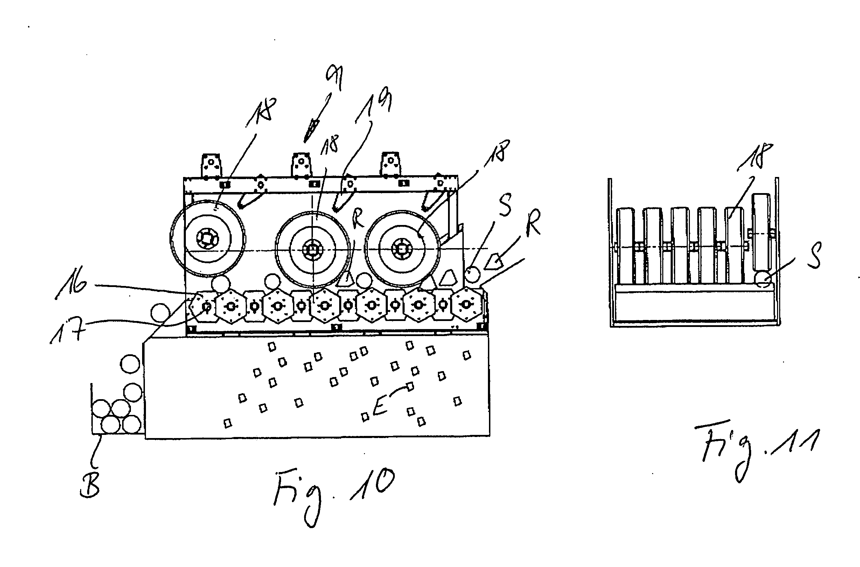

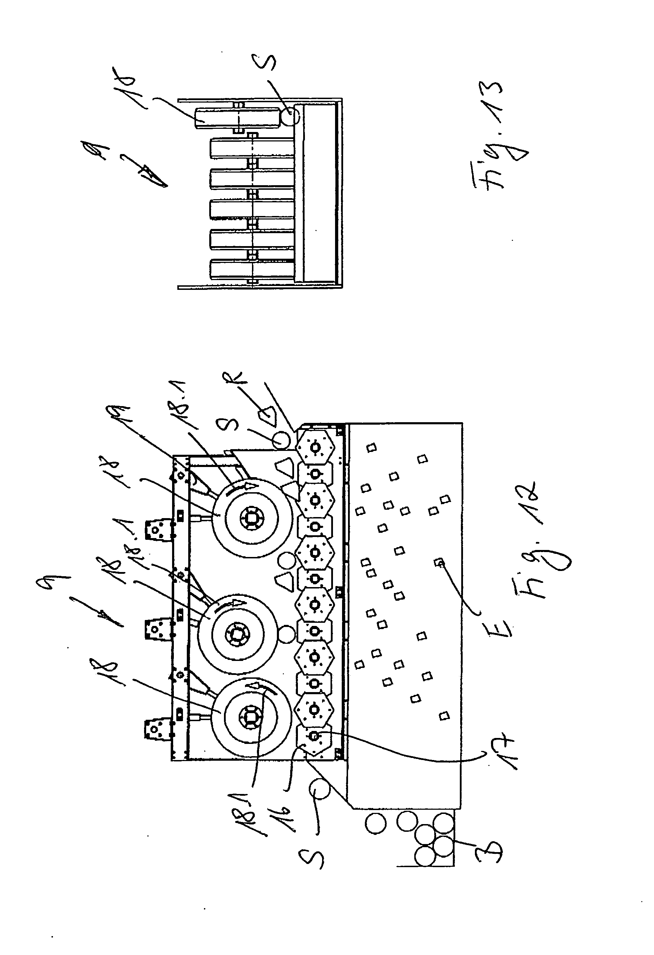

In der Fig. 10 ist dargestellt, wie sich in der Zerkleinerungsstufe die Zerkleinerungswerkzeuge 16 und die unterschiedlich nachgiebig gehalterten Andrückkörper 18 verhalten, wenn Steine S und Rüben R auf die Zerkleinerungswerkzeuge 16 und die Andrückkörper 18 treffen. So können Steine S und Rüben R den in Förderrichtung ersten Andrückkörper 18 noch passieren, wobei einzelne Rüben über die Zerkleinerungswerkzeuge und den Andrückkörper 18 teilweise schon in die zerkleinerten Stücke E als Energieträger zerkleinert werden. Noch nicht zerkleinerte Stücke der Rüben R können über den zweiten Andrückkörper 18 laufen und werden nachfolgend zerkleinert. Aufgrund der nachgiebigen Halterung können die Steine S auch den zweiten und den dritten Andrückkörper 18 passieren und gelangen dann in Förderlängsrichtung in den Aufnahmebehälter B. Die zu Fig. 10 analoge Darstellung nach Fig. 12 verdeutlicht, dass dazu die Andrückkörper 18 auch unterschiedliche Drehrichtungen haben können, wie dies durch die Pfeile 18.1 angedeutet ist.

## Patentansprüche

1. Vorrichtung (1) zur Aufbereitung von landwirtschaftlichem Erntegut als Aufgabematerial für einen Bioreaktor, insbesondere zur Aufbereitung von Rüben, mit einer Reinigungsstufe (7) und einer sich in Erntegutförderrichtung (15) daran anschließenden Zerkleinerungsstufe (9), **dadurch gekennzeichnet, dass** die Reinigungsstufe mehrere nebeneinander auf einem in eine Rotationsbewegung versetzbaren Walzenkörper (14) mit Abstand zueinander angeordnete Reinigungswerkzeuge (13) aufweist, wobei in Erntegutförderrichtung (15) mehrere Reihen von mit Reinigungswerkzeugen (13) versehenen Walzenkörpern (14) vorgesehen sind, über die das Erntegut in Richtung der Zerkleinerungsstufe (9) transportierbar ist, und dass die Zerkleinerungsstufe (9) mehrere nebeneinander angeordnete Zerkleinerungswerkzeuge (16) aufweist, denen zumindest ein nachgiebig gehalterter Andrückkörper (18) zugeordnet ist.

2. Vorrichtung zur Aufbereitung von landwirtschaftlichem Erntegut nach Anspruch 1, **dadurch gekennzeichnet, dass** die Zerkleinerungsstufe (9) in Förderrichtung (15) des Erntegutes mehrere mit Abstand zueinander angeordnete Zerkleinerungswerkzeuge (16) aufweist.

3. Vorrichtung zur Aufbereitung von landwirtschaftlichem Erntegut nach Anspruch 2, **dadurch gekennzeichnet, dass** die Zerkleinerungsstufe (9) Reihen von in Förderrichtung (15) des Erntegutes hintereinander angeordneten Zerkleinerungswerkzeugen (16) aufweist, wobei benachbarte Reihen von in Förderrichtung (15) hintereinander angeordneten Zerkleinerungswerkzeuge (18) bezogen auf die Zerkleinerungswerkzeuge (16) versetzt zueinander angeordnet sind und in Förderrichtung (15) benachbarte Zerkleinerungswerkzeuge (16) ein Überlappungsmaß zueinander aufweisen.

4. Vorrichtung zur Aufbereitung von landwirtschaftlichem Erntegut nach einem der Ansprüche 2 und 3, **dadurch gekennzeichnet, dass** die Zerkleinerungswerkzeuge (16) als Mehrkantscheiben aus einem metallischen Material ausgebildet sind, wobei in Förderrichtung (15) benachbarte Zerkleinerungswerkzeuge (16) als Mehrkantscheiben derart versetzt zueinander angeordnet sind, dass eine Spitze einer Mehrkantscheibe in Förderrichtung (15) neben einer Kante einer benachbarten Mehrkantscheibe zugeordnet ist.

5. Vorrichtung zur Aufbereitung von landwirtschaftlichem Erntegut nach einem der Ansprüche 2 bis 4, **dadurch gekennzeichnet, dass** die Mehrkantscheibe als Sechskantscheibe ausgebildet ist.

6. Vorrichtung zur Aufbereitung von landwirtschaftlichem Erntegut nach einem der Ansprüche 2 bis 5, **dadurch gekennzeichnet, dass** die Zerkleinerungswerkzeuge (16) der Zerkleinerungsstufe (9) von einem trichterförmigen Auffangbecken (11) untergriffen sind, welches das Zerkleinerungsgut einer Förderschnecke (12) aufgibt.

7. Vorrichtung zur Aufbereitung von landwirtschaftlichem Erntegut nach einem der Ansprüche 1 bis 6, **dadurch gekennzeichnet, dass** der Zerkleinerungsstufe (9) in Förderrichtung (15) des Erntegutes mehrere nachgiebig gehalterte Andrückkörper (18) zugeordnet sind.

8. Vorrichtung zur Aufbereitung von landwirtschaftlichem Erntegut nach Anspruch 7, **dadurch gekennzeichnet, dass** in Förderrichtung (15) des Erntegutes zumindest zwei Reihen von nachgiebig gehalterten Andrückkörper (18) mit Lageabstand zueinander in Förderrichtung (15) des Erntegutes vorgesehen sind, wobei jede Reihe der Andrückkörper (18) mehrere mit Abstand zueinander angeordnete Nachdrückkörper (18) aufweist.

9. Vorrichtung zur Aufbereitung von landwirtschaftlichem Erntegut nach einem der Ansprüche 1 bis 8, **dadurch gekennzeichnet, dass** die Andrückkörper (18) jeweils einzeln nachgiebig gehaltert sind.

10. Vorrichtung zur Aufbereitung von landwirtschaftlichem Erntegut nach Anspruch 8, **dadurch gekennzeichnet, dass** die Andrückkörper (18) in einer Reihe von Andruckkörpern (18) gemeinsam nachgiebig gehaltert sind.

11. Vorrichtung zur Aufbereitung von landwirtschaftlichem Erntegut nach einem der Ansprüche 1 bis 9, **dadurch gekennzeichnet, dass** die Andrückkörper (18) unabhängig voneinander nachgiebig gehalten sind.

12. Vorrichtung zur Aufbereitung von landwirtschaftlichem Erntegut nach einem der Ansprüche 1 bis 9, **dadurch gekennzeichnet, dass** einzelne Andrückkörper (18) zu einer Gruppe zusammengefasst nachgiebig gehaltert sind.

13. Vorrichtung zur Aufbereitung von landwirtschaftlichem Erntegut nach einem der Ansprüche 1 bis 12, **dadurch gekennzeichnet, dass** ein Andrückkörper (18) derart nachgiebig gehaltert ist, dass er mit einer vertikalen Bewegungskomponente und einer horizontalen Bewegungskomponente nachgiebig gehaltert ist.

14. Vorrichtung zur Aufbereitung von landwirtschaftlichem Erntegut nach einem der Ansprüche 1 bis 13, **dadurch gekennzeichnet, dass** der Andrückkörper (18) als Nachdrückrolle oder als Nachdrückwalze ausgebildet ist.

15. Vorrichtung zur Aufbereitung von landwirtschaftlichem Erntegut nach einem der Ansprüche 1 bis 14, **dadurch gekennzeichnet, dass** der Abstand von Zerkleinerungswerkzeugen (16) und der Abstand von Andrückkörper (18) verstellbar ausgebildet sind.

16. Vorrichtung zur Aufbereitung von landwirtschaftlichem Erntegut nach einem der Ansprüche 1 bis 15, **dadurch gekennzeichnet, dass** die Nachgiebigkeit eines Andrückkörper (18) verstellbar ausgebildet ist.

17. Vorrichtung zur Aufbereitung von landwirtschaftlichem Erntegut nach Anspruch 16, **dadurch gekennzeichnet, dass** die Andrückkörper (18) hydraulisch oder pneumatisch nachgiebig abgestützt sind.

18. Vorrichtung zur Aufbereitung von landwirtschaftlichem Erntegut nach Anspruch 17, **dadurch gekennzeichnet, dass** über eine Drossel der hydraulische oder pneumatische Druck der hydraulischen oder pneumatischen Nachgiebigkeit einstellbar ist.

19. Vorrichtung zur Aufbereitung von landwirtschaftlichem Erntegut nach einem der Ansprüche 1 bis 18, **dadurch gekennzeichnet, dass** ein Reinigungswerkzeug (13) als Fingerscheibe oder Sternwalze mit auf dem Umfang verteilt angeordneten Fingern ausgebildet ist.

20. Vorrichtung zur Aufbereitung von landwirtschaftlichem Erntegut nach einem der Ansprüche 1 bis 19 **dadurch gekennzeichnet, dass** in Förderrichtung (15) des Erntegutes mehrere Reihen von nebeneinander angeordneten Zerkleinerungswerkzeugen (16) vorgesehen sind mit einer Mehrzahl von Zerkleinerungswerkzeugen (16) in einer Reihe, wobei in Förderrichtung (15) benachbarte Zerkleinerungswerkzeuge (16) einander überlappen und mit Versatzmaß zueinander angeordnet sind.

21. Vorrichtung zur Aufbereitung von landwirtschaftlichem Erntegut nach einem der Ansprüche 1 bis 20, **dadurch gekennzeichnet, dass** die Reinigungswerkzeuge (13) aus einem Kunststoffmaterial bestehen.

22. Vorrichtung zur Aufbereitung von landwirtschaftlichem Erntegut nach einem der Ansprüche 1 bis 21, **dadurch gekennzeichnet, dass** der Reinigungsstufe (7) über einen Bunker (4) und einen Zuförderer (5) das landwirtschaftliche Erntegut zuführbar ist.

23. Vorrichtung zur Aufbereitung von landwirtschaftlichem Erntegut nach einem der Ansprüche 1 bis 22, **dadurch gekennzeichnet, dass** sich an die Zerkleinerungsstufe (9) ein schwenkbarer Abförderer (13) anschließt.

24. Vorrichtung zur Aufbereitung von landwirtschaftlichem Erntegut nach einem der Ansprüche 1 bis 23, **dadurch gekennzeichnet, dass** der Reinigungsstufe (7) Abförderer (8) für kleine Steine zugeordnet sind.

25. Vorrichtung zur Aufbereitung von landwirtschaftlichem Erntegut nach einem der Ansprüche bis 1 bis 24, **dadurch gekennzeichnet, dass** der Andrückkörper (18) an eine schwenkbeweglich an einem Rahmen (20) gehalterten Schwinge (19) befestigt ist.

26. Vorrichtungen nach einem der Ansprüche 1 bis 25, **dadurch gekennzeichnet, dass** die Drehzahl und die Drehrichtung der Zerkleinerungswerkzeuge (16), der Reinigungswerkzuge (13) und/oder des Andrückkörpers (18), steuerbar und/oder hinsichtlich ihrer Drehrichtung veränderbar ist.
